# FASCICULE DE BREVET EUROPEEN

(11) **EP 1 092 585 B1**
(45) Date de publication et mention de la délivrance du brevet: **31.08.2005**
(21) Numéro de dépôt: 01102204.3
(22) Date de dépôt: 30.06.1998
(51) Int. Cl.: B60N 2/42

(54) **Siège de véhicule doté d'un dispositif de protection du cou en cas de choc arrière**
Fahrzeugsitz mit einer Halsschutzvorrichtung bei einem Heckaufprall
Vehicle seat with a neck protection device in case of rear impact

(30) Priorité: 03.07.1997 FR 9708435
(43) Date de publication de la demande: 18.04.2001
(62) Demande divisionnaire de: 98401626.1
(73) Titulaire: Faurecia Siège d'Automobile S.A., 92100 Boulogne (FR)
(72) Inventeur: Charras, Fabrice, 75014 Paris (FR); Courtois, Bernard, 91150 Morigny (FR); Ziar, Yacine, 91260 Juvisy sur Orge (FR)
(74) Mandataire: Burbaud, Eric

(56) Documents cités:
- WO-A-97/10117
- FR-A- 2 602 133
- US-A- 3 578 376
- US-A- 3 802 737
- US-A- 5 219 202
- US-A- 5 366 269
- US-A- 5 462 332

## Description

La présente invention est relative aux sièges de véhicules dotés de dispositifs de protection du cou en cas de choc arrière.

Plus particulièrement, l'invention concerne un siège de véhicule comportant un dossier qui est surmonté d'un appui-tête et qui est doté d'une armature rigide supportant une matelassure, ce dossier présentant une face avant qui est destinée à servir d'appui pour le dos d'un passager, l'armature du dossier étant formée en deux parties déplaçables l'une par rapport à l'autre, savoir d'une part, une partie inférieure et d'autre part une partie supérieure qui porte l'appui-tête, cette partie supérieure étant montée pivotante sur la partie inférieure autour d'un axe de rotation entre des première et deuxième positions angulaires, respectivement inclinées au maximum vers l'arrière et au maximum vers l'avant par rapport à la partie inférieure, la face avant du dossier présentant elle-même deux zones superposées inférieure et supérieure qui sont solidaires respectivement des parties inférieure et supérieure de l'armature du dossier, la partie supérieure de l'armature du dossier présentant un organe d'appui qui est disposé dans le dossier au-dessous du niveau de l'axe de rotation de ladite partie supérieure pour que, lorsque le véhicule subit un choc arrière, le dos du passager appuie vers l'arrière sur ledit organe d'appui en s'enfonçant dans la matelassure du dossier, de façon à solliciter la partie supérieure de l'armature du dossier vers sa deuxième position angulaire, les parties supérieure et inférieure de l'armature du dossier étant reliées entre elles par l'intermédiaire d'un dispositif de blocage qui empêche normalement le pivotement involontaire de la partie supérieure, ce dispositif de blocage étant dimensionné pour céder lorsque la partie supérieure du dossier n'est pas dans sa deuxième position angulaire et que ledit organe d'appui subit une force dirigée vers l'arrière et supérieure à une valeur prédéterminée, en cas de choc arrière, et l'appui-tête étant monté sur la partie supérieure de l'armature du dossier de façon à subir le même mouvement que ladite partie supérieure en cas de choc arrière.

Ainsi, en cas de choc arrière subi par le véhicule, la partie haute du dossier pivote avec l'appui-tête vers l'avant, de sorte que :
- d'une part, l'appui-tête se rapproche de la nuque du passager en la retenant de façon plus efficace,
- et d'autre part, on diminue l'inclinaison vers l'arrière de la partie haute du dossier : ainsi, le passager du siège a moins tendance à être projeté vers le haut par effet de rampe, ce qui évite que la nuque du passager ne se retrouve au-dessus du niveau de l'appui-tête.

On diminue donc les risques de blessure du passager.

Le document WO-A-97/10117 décrit un exemple de siège de véhicule du type susmentionné.

La présente invention a notamment pour but de perfectionner les sièges du genre en question.

A cet effet, selon l'invention, un siège du genre en question est caractérisé en ce le dispositif de blocage comprend un mécanisme de réglage entraîné par un organe de commande, ce mécanisme de réglage étant adapté pour déplacer la partie supérieure de l'armature du dossier entre ses première et deuxième positions angulaires en fonction de l'actionnement de l'organe de commande, et pour bloquer ladite partie supérieure de l'armature du dossier lorsque l'organe de commande n'est pas actionné, tant que ledit organe d'appui ne subit pas une force dirigée vers l'arrière et supérieure à ladite valeur prédéterminée.

Dans des modes de réalisation préférés de l'invention, on peut éventuellement avoir recours en outre à l'une et/ou à l'autre des dispositions suivantes :
- la partie supérieure de l'armature du dossier est montée sur la partie inférieure pour se déplacer vers le haut en même temps qu'elle pivote vers l'avant ;
- la partie supérieure de l'armature du dossier se présente sous la forme d'un cadre qui comporte une traverse inférieure horizontale, laquelle traverse constitue ledit organe d'appui ;
- le mécanisme de réglage comprend au moins un organe d'entraînement rotatif en prise avec une denture, cet organe d'entraînement et cette denture étant reliés l'un à la partie supérieure de l'armature du dossier et l'autre à la partie inférieure de cette armature pour qu'un déplacement de l'organe d'entraînement sur la denture corresponde à une variation d'inclinaison de la partie supérieure de l'armature du dossier, et la denture étant adaptée pour se déformer progressivement plastiquement en permettant à l'organe d'entraînement de se déplacer sans rotation le long de ladite denture en cas de choc arrière, cette denture constituant ainsi les moyens d'absorption d'énergie ;
- la partie supérieure de l'armature du dossier est montée pivotante sur la partie inférieure de cette armature au moyen de pivots coulissant dans des glissières, au moins un de ces pivots comprenant ledit organe d'entraînement, et ladite denture étant formée dans la glissière correspondante ;
- la partie supérieure de l'armature du dossier est montée pivotante sur la partie inférieure de cette armature au moyen de pivots coulissant dans des glissières, au moins un de ces pivots étant solidarisé avec une bielle, ce pivot et la glissière correspondante étant solidaires l'une de la partie supérieure de l'armature du dossier, et l'autre de la partie inférieure de cette armature, la bielle étant déplaçable au moyen dudit mécanisme de réglage par rapport à la partie de l'armature du dossier qui comprend ladite glissière, de façon qu'un déplacement de la bielle entraîne un déplacement concomitant des pivots dans leurs glissières, et la bielle étant déformable plastiquement en cas de choc arrière en constituant ainsi les moyens d'absorption d'énergie ;
- le mécanisme de réglage comprend un pignon monté rotatif sur la partie de l'armature du dossier qui comprend la glissière correspondant à la bielle, ce pignon étant en prise avec une crémaillère formée dans la bielle;
- la bielle se présente sous la forme d'une plaque de tôle qui est pourvue d'une fente s'étendant entre des première et deuxième extrémités, cette fente comportant une partie élargie à sa première extrémité et une partie resserrée qui s'étend depuis ladite partie élargie jusqu'à la deuxième extrémité de la fente, le pivot qui est solidarisé avec la bielle étant engagé sensiblement sans jeu dans ladite partie élargie, ladite fente étant disposée sensiblement en correspondance avec la glissière dans laquelle coulisse ledit pivot au moins lorsque la partie supérieure de l'armature du dossier est dans sa première position angulaire, et la fente étant adaptée pour se déformer plastiquement progressivement en permettant audit pivot de se déplacer vers la deuxième extrémité de la fente lorsque la partie supérieure de l'armature du dossier est déplacée vers sa deuxième position angulaire en cas de choc arrière ;
- le mécanisme de réglage est porté par la partie inférieure de l'armature du dossier et entraîne un pignon qui est en prise avec une bielle dentée montée pivotante sur la partie inférieure du dossier et articulée à la partie supérieure du dossier, le mécanisme de réglage étant adapté pour laisser tourner le pignon en le freinant en l'absence d'actionnement de l'organe de commande, lorsque ledit pignon subit un couple de rotation supérieur à une valeur prédéterminée, en cas de choc arrière ;
- le mécanisme de réglage entraîne un pignon qui est monté sur la partie inférieure de l'armature du dossier et qui entraîne une came dentée elle-même montée pivotante sur ladite partie inférieure, cette came présentant un bord d'appui qui est en contact avec un élément solidaire de la partie supérieure de l'armature du dossier de façon à permettre uniquement un déplacement de ladite partie supérieure vers sa deuxième position angulaire, et ladite partie supérieure de l'armature du dossier étant sollicitée élastiquement vers sa première position angulaire ;
- l'élément solidaire de la partie supérieure de l'armature du dossier relie ladite partie supérieure à une biellette qui est montée pivotante sur la partie inférieure de l'armature du dossier.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue schématique d'un siège selon l'invention,
- la figure 2 est une vue éclatée en perspective montrant une partie de l'armature du dossier appartenant au siège de la figure 1, selon une première forme de réalisation de l'invention,
- les figures 3 et 4 sont des vues schématiques partielles de l'armature de dossier de la figure 2, respectivement dans les deux positions angulaires extrêmes de la partie supérieure de cette armature,
- la figure 5 est une vue en perspective partielle de l'armature du dossier appartenant au siège de la figure 1, selon une deuxième forme de réalisation de l'invention,
- les figures 6 et 7 sont des vues schématiques partielles de l'armature de la figure 5, respectivement dans les deux positions angulaires extrêmes de la partie supérieure de cette armature,
- la figure 8 est une vue schématique partielle de l'armature du dossier appartenant au siège de la figure 1, selon une troisième forme de réalisation de l'invention,
- la figure 9 est une vue de détail en coupe de l'armature de la figure 8, montrant le mécanisme de commande de cette armature,
- et la figure 10 est une vue en perspective partielle de l'armature du dossier appartenant au siège de la figure 1 selon une quatrième forme de réalisation de l'invention.

Sur les différentes figures, les mêmes références désignent des éléments identiques ou similaires.

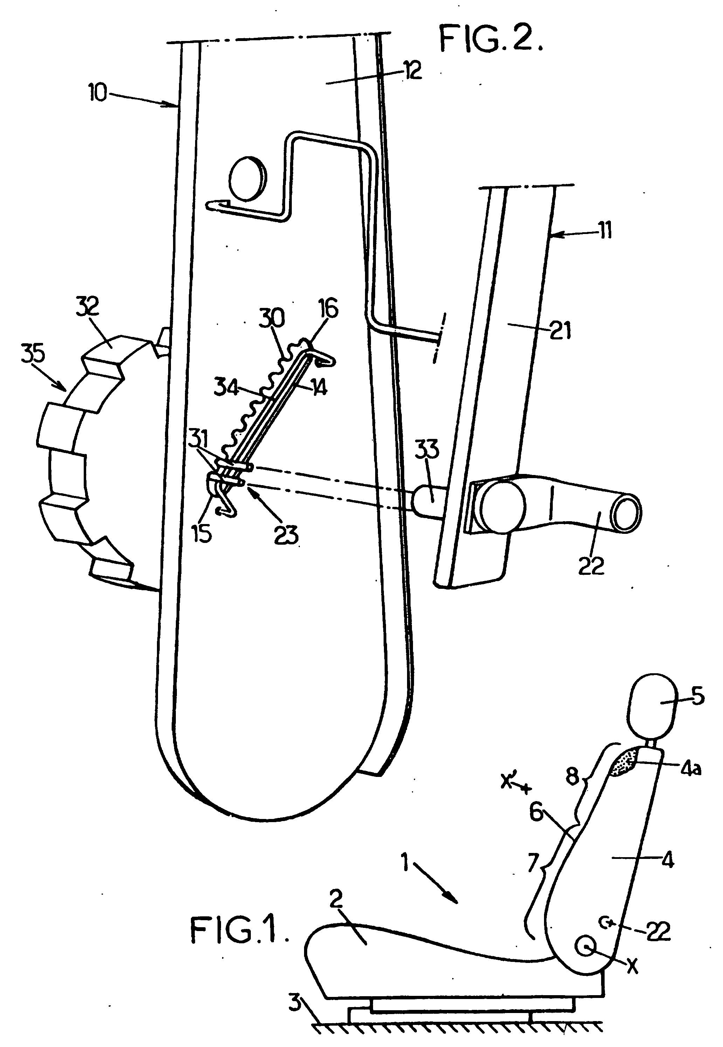

La figure 1 représente un siège de véhicule 1, notamment un siège avant de véhicule automobile, qui comporte, d'une part, une assise 2 montée sur le plancher 3 du véhicule, et d'autre part, un dossier 4 monté pivotant sur l'assise 2 autour d'un axe horizontal transversal X.

Le dossier 4 comprend une armature métallique rigide qui supporte une matelassure 4a, et qui porte un appui-tête 5. Par ailleurs, le dossier 4 présente une face avant 6 qui est destinée à servir d'appui pour le dos d'un passager, cette face avant se subdivisant elle-même en une zone inférieure 7 et une zone supérieure 8 dont l'inclinaison peut varier lorsque le véhicule subit un choc arrière, comme il sera expliqué ci-après.

A cet effet, comme représenté sur les figures 2, 3 et 4 pour une première forme de réalisation de l'invention, l'armature 9 du dossier est formée en deux parties déplaçables l'une par rapport à l'autre, savoir d'une part, une partie inférieure 10 qui est montée pivotante sur l'assise 2 autour de l'axe transversal X et qui est solidaire de la partie inférieure 7 de la face avant du dossier, et d'autre part, une partie supérieure 11 qui est montée pivotante sur la partie inférieure 10 autour d'un axe de pivotement imaginaire X' (figure 1) et qui est solidaire de la zone supérieure 8 de la face avant du dossier.

Dans l'exemple particulier considéré ici, la partie inférieure 10 de l'armature du dossier comporte deux flasques latéraux verticaux 12 qui sont montés pivotants sur l'assise 2 autour de l'axe transversal X et qui sont reliés entre eux par une traverse inférieure.

Les flasques 12 comportent deux rainures inférieures 14, dont une seule est visible sur la figure 2, ces rainures inférieures 14 étant disposées en correspondance l'une avec l'autre de part et d'autre du dossier et s'étendant chacune vers le haut et vers l'arrière depuis une première extrémité 15 jusqu'à une deuxième extrémité 16.

De plus, les deux flasques 12 comportent en outre deux rainures supérieures 17 qui sont disposées en correspondance l'une avec l'autre de part et d'autre du dossier, et qui s'étendent chacune vers le haut et vers l'avant depuis une première extrémité 18 jusqu'à une deuxième extrémité 19.

Par ailleurs, la partie supérieure 11 de l'armature du dossier comporte un profilé métallique, par exemple tubulaire, qui est plié en forme générale de U, avec une traverse supérieure et deux branches latérales 21 qui sont reliées l'une à l'autre vers leurs extrémités inférieures par une traverse 22 rigide (figure 2), légèrement courbée vers l'arrière.

La traverse 22 est disposée à l'intérieur du dossier 4, légèrement au-dessus du niveau de l'assise 2 et au-dessous du niveau de l'axe de pivotement imaginaire X' de la partie supérieure 11 de l'armature du dossier (voir figure 1).

De plus, chacune des branches latérales 21 appartenant à la partie supérieure 11 de l'armature comporte :
- un pivot inférieur 23 qui est engagé dans la rainure inférieure 14 correspondante et qui se trouve normalement à la première extrémité 15 de cette rainure,
- et un pivot supérieur 24 qui est engagé dans la rainure 17 correspondante.

Enfin, l'armature 9 du dossier comporte en outre un dispositif de blocage qui maintient normalement la partie supérieure 11 de cette armature dans la position décrite ci-dessus, dite première position angulaire.

Par ailleurs, comme représenté sur la figure 2, l'une des rainures inférieures 14 est pourvue d'une denture 30 qui forme l'un des bords longitudinaux de cette rainure.

De plus, le pivot 23 qui se déplace dans la rainure 14 comprend un organe rotatif à deux doigts 31 qui s'étendent parallèlement aux axes X et X' et qui peuvent être entraînés en rotation par une poignée 32.

Ces deux doigts 31 pénètrent dans une douille 33 qui est solidarisée avec l'une des branches latérales 21 et avec la traverse 22 de la partie supérieure 11 de l'armature du dossier, de façon qu'un déplacement des doigts 31 le long de la rainure 14 entraîne un déplacement angulaire concomitant de la partie supérieure 11 de l'armature du dossier.

De plus, un fil métallique élastique 34, monté sur le flasque 12 qui comprend la rainure dentée 14, appuie en permanence sur la douille 33 de façon à solliciter les doigts 31 vers le fond de la denture 30.

La denture 30, les doigts 31, la poignée 32, la douille 33 et le ressort 34 constituent ainsi un mécanisme de manoeuvre 35 qui permet, en faisant tourner la poignée 32, de régler l'inclinaison de la partie supérieure 11 de l'armature du dossier par rapport à la partie inférieure 10.

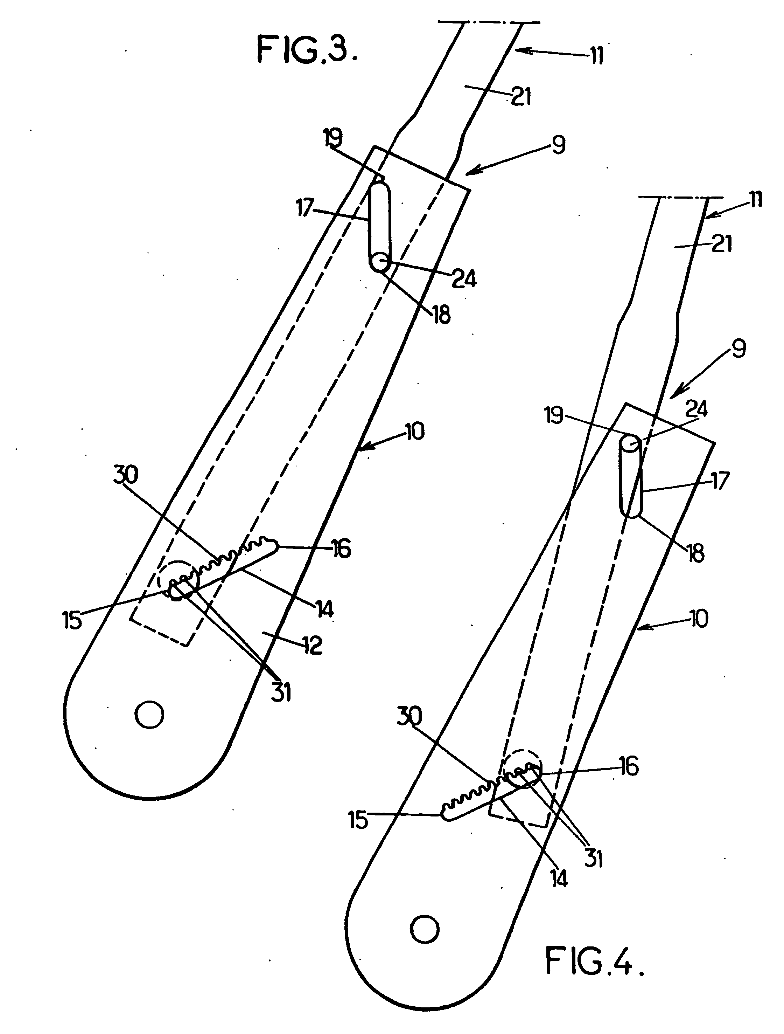

Cette inclinaison est ainsi réglable entre :
- d'une part, la première position angulaire susmentionnée de l'armature 11, lorsque les doigts 31 se trouvent à la première extrémité 15 de la rainure 14 correspondante (figure 3),
- et d'autre part, la deuxième position angulaire susmentionnée de l'armature 11, lorsque les doigts 31 se trouvent à la deuxième extrémité 16 de la rainure 14 correspondante (figure 4).

Ce réglage permet d'améliorer le confort du siège 1.

Le mécanisme de manoeuvre 35 est irréversible, c'est-à-dire qu'il reste normalement bloqué tant que la poignée 32 n'est pas actionnée.

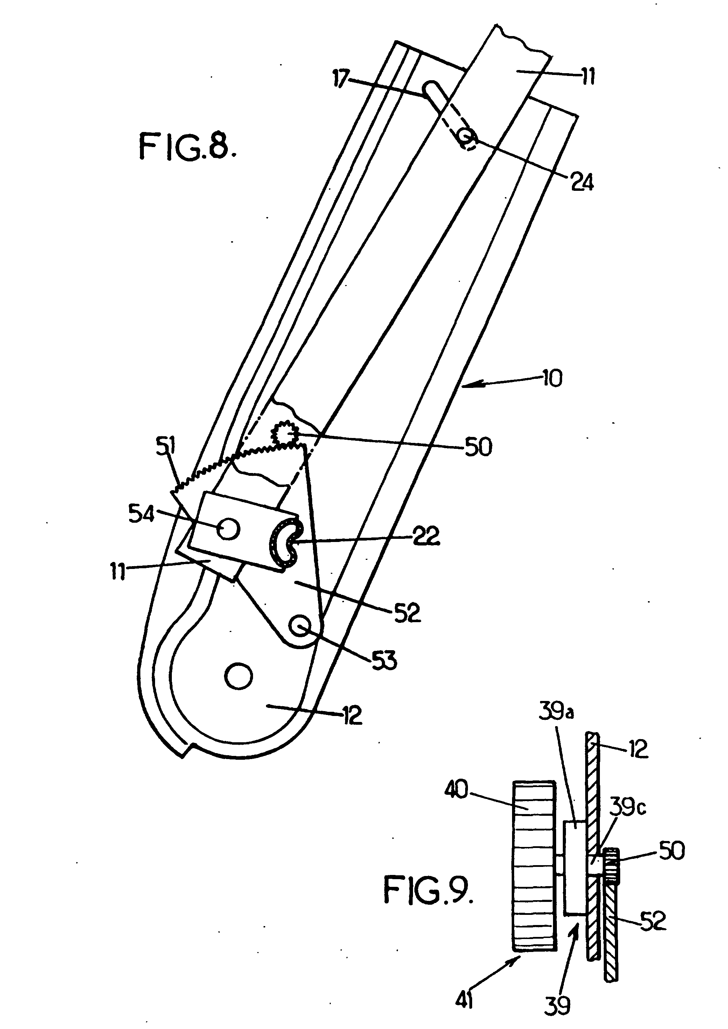

Cependant, si le véhicule subit un choc arrière suffisamment important, alors que la partie supérieure 11 de l'armature du dossier ne se trouve pas dans sa deuxième position angulaire, la denture 30 s'écrase progressivement en laissant les doigts 31 se déplacer vers l'extrémité 16 de la rainure 14 correspondante, ce qui permet à la partie supérieure 11 de l'armature du dossier de se déplacer jusqu'à sa deuxième position angulaire représentée sur la figure 9.

Au cours de ce mouvement, la déformation plastique progressive de la denture 30 absorbe une partie de l'énergie du choc, et la zone supérieure 8 de la face avant du dossier se déplace vers l'avant et vers le haut avec l'appui-tête 5, comme expliqué précédemment.

Si un choc arrière se produit alors que la partie supérieure 11 de l'armature du dossier a déjà été réglée par l'utilisateur du siège dans sa deuxième position angulaire, représentée sur la figure 9, alors cette partie supérieure reste dans ladite deuxième position angulaire, ce qui n'est pas gênant puisque le dossier du siège est alors dans la position optimale pour protéger le passager.

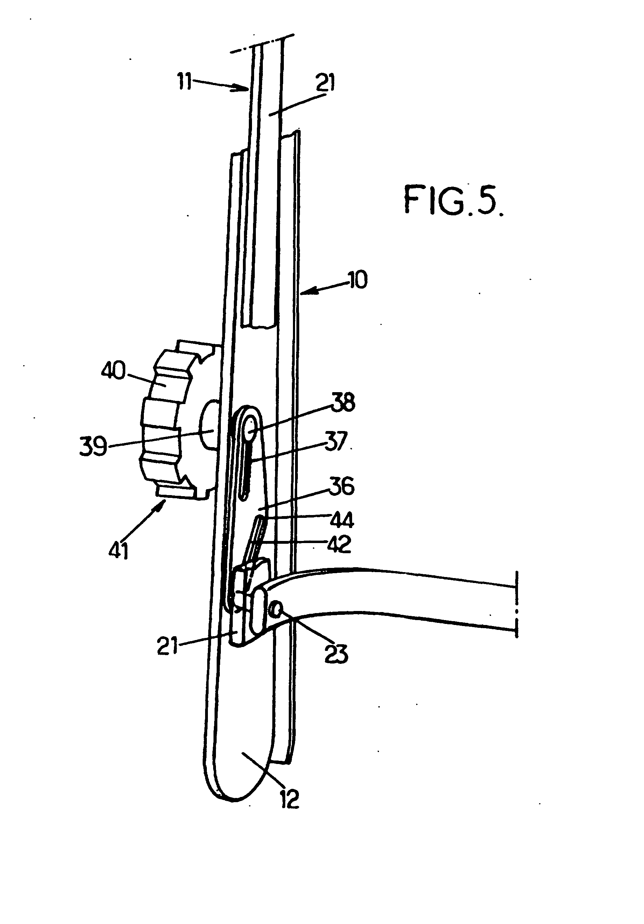

Dans la deuxième forme de réalisation de l'invention, représentée sur les figures 5 à 7, les rainures 14, 17 sont toutes dépourvues de crans, et le pivot 23 de l'une des rainures 14 est solidarisé avec une bielle 36 pourvue d'une crémaillère 37 en prise avec un pignon 38.

Ce pignon 38 est monté pivotant sur le flasque 12 correspondant, et il est couplé à un mécanisme de transmission irréversible 39, connu en soi dans l'état de la technique, ce mécanisme de transmission étant lui-même commandé par une poignée rotative 40.

La bielle 36, sa crémaillère 37, le pignon 38, le mécanisme de transmission 39 et la poignée 40 constituent ainsi un mécanisme de manoeuvre irréversible 41 qui permet de faire varier, en actionnant la poignée 40, la distance entre le pignon 38 et le pivot 23.

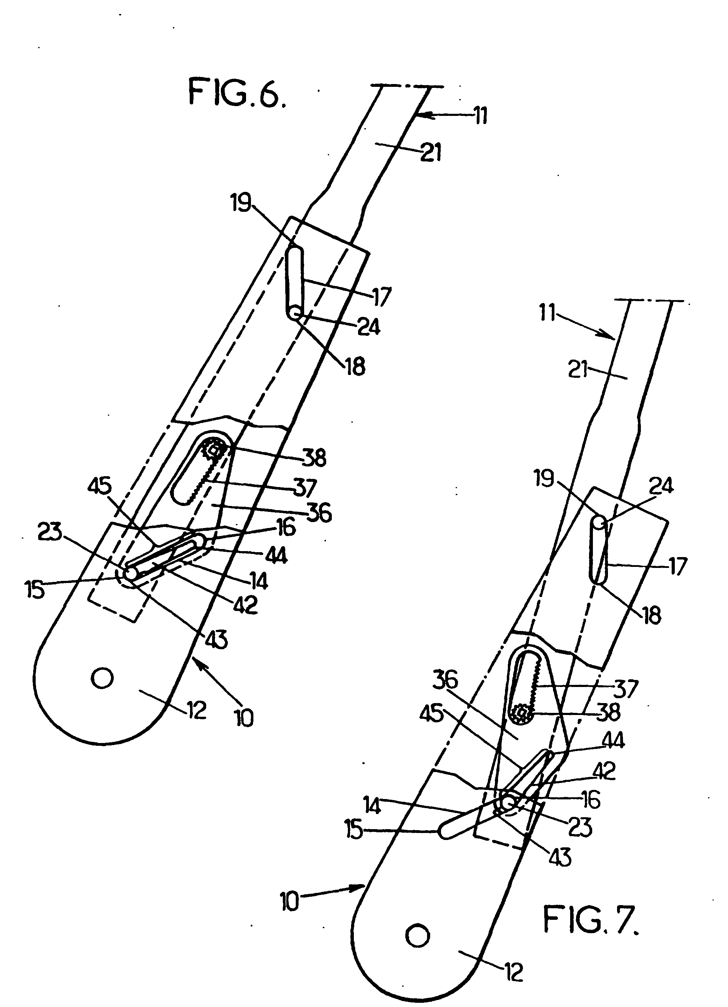

On peut ainsi déplacer le pivot 23 dans la rainure 14 correspondante, entre :
- d'une part, la première extrémité 15 de ladite rainure 14, ce qui correspond à la première position angulaire susmentionnée de la partie supérieure 11 de l'armature du dossier (figure 6),
- et d'autre part, la deuxième extrémité 16 de la rainure 14, ce qui correspond à la deuxième position angulaire susmentionnée de la partie supérieure 11 de l'armature du dossier (figure 7).

En revanche, le pignon 38 reste bloqué tant que la poignée 40 n'est pas actionnée, même si un effort est exercé sur la partie supérieure 11 du dossier.

Toutefois, lorsque le véhicule subit un choc arrière suffisamment important, la bielle 36 est adaptée pour se déformer plastiquement progressivement en permettant à la partie supérieure 11 du dossier de pivoter jusqu'à sa deuxième position angulaire lorsque cette partie supérieure n'a pas déjà été réglée dans ladite deuxième position angulaire, comme expliqué ci-dessus en regard de la première forme de réalisation.

Afin de faciliter cette déformation plastique, la bielle 36 se présente avantageusement sous la forme d'une plaque de tôle dotée d'une fente 42 en forme de coin qui s'étend entre, d'une part une première extrémité 43 formant une portion élargie dans laquelle le pivot 23 est reçu sans jeu, et d'autre part une extrémité 44 plus mince, la partie 45 de la fente 42, qui est située entre le pivot 23 et l'extrémité 44, étant suffisamment étroite pour empêcher normalement le passage du pivot 23.

De préférence, la fente 42 est disposée sensiblement en correspondance avec la fente 14 adjacente lorsque la partie supérieure 11 de l'armature du dossier se trouve dans sa première position angulaire (figure 6).

Ainsi, lorsque le véhicule subit un choc arrière, la fente 42 se déforme plastiquement au fur et à mesure du déplacement du pivot 23, en absorbant une partie de l'énergie du choc.

Dans la troisième forme de réalisation de l'invention, représentée sur les figures 8 et 9, les flasques latéraux 12 de la partie inférieure de l'armature du dossier comportent toujours des rainures supérieures 17 s'étendant vers le haut et vers l'avant et recevant chacune un pivot 24 solidaire de la partie supérieure 11 de l'armature du dossier.

Comme dans la deuxième forme de réalisation, ces rainures supérieures 17 sont lisses.

De plus, toujours comme dans la deuxième forme de réalisation de l'invention, la position angulaire de la partie supérieure 11 de l'armature du dossier peut être réglée au moyen d'une poignée rotative 40 qui entraîne un mécanisme de transmission 39 de type "irréversible" connu en soi. Le mécanisme de transmission 39 peut par exemple être du type de celui divulgué dans le document DE-37 34363 dans le document US-5 593 210, dans le document FR-843 668, ou encore dans le document US-1 529 248.

Le boîtier 39a de ce mécanisme de transmission est fixé sur le flasque 12, tandis que l'arbre d'entrée 39b dudit mécanisme est solidarisé avec la poignée 40, l'arbre de sortie 39c dudit mécanisme étant solidarisé avec un pignon 50 qui engrène avec une denture 51 en arc de cercle, formée à une extrémité d'une bielle 52 dont l'autre extrémité est montée pivotante sur le flasque 12.

De plus, la bielle 52 est reliée à l'extrémité inférieure de la partie supérieure 11 de l'armature du dossier par l'intermédiaire d'un pivot 54 qui, de préférence, solidarise également la traverse 22 avec ladite extrémité inférieure de la partie supérieure 11 du dossier.

Une bielle similaire (sans denture) est prévue sur l'autre côté du siège, avec une barre de liaison entre les deux bielles pour synchroniser leur mouvement.

Le mécanisme de transmission 39 est adapté pour immobiliser le pignon 50 en l'absence d'actionnement de la poignée 40, tant qu'un couple prédéterminé n'est pas appliqué audit pignon 50.

Au contraire, lorsqu'un couple supérieur à ce couple prédéterminé est appliqué au pignon 50, le mécanisme de transmission 39 permet au pignon 50 de tourner sur lui-même, tout en le freinant.

Ainsi, lorsque le véhicule dans lequel est monté le siège subit un choc arrière violent, le dos du passager appuie sur la traverse 22 vers l'arrière, ce qui génère au niveau du pignon 50 un couple supérieur au couple prédéterminé susmentionné, de sorte que l'extrémité inférieure de la partie supérieure 11 de l'armature du dossier se déplace vers le haut et vers l'arrière avec la bielle 52, tandis que l'extrémité supérieure de la partie supérieure 11 de l'armature du dossier se déplace vers le haut et vers l'avant en suivant la forme de la rainure 17, ce mouvement étant freiné par le mécanisme de transmission 39, qui absorbe une partie de l'énergie dudit mouvement par frottement.

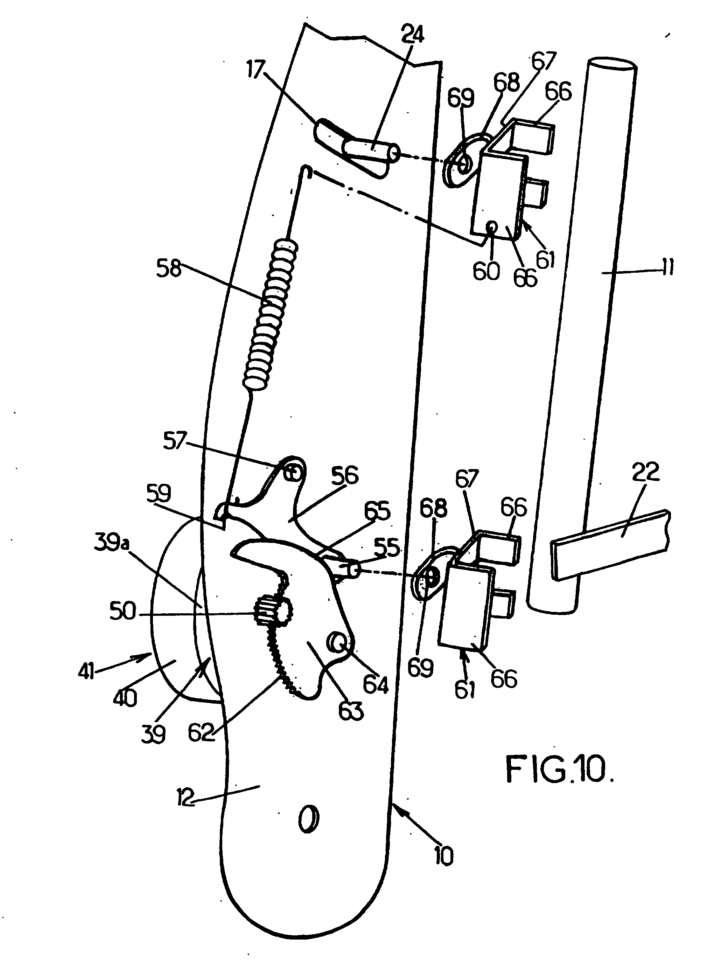

Dans la quatrième forme de réalisation de l'invention, représentée sur la figure 10, la partie supérieure 11 de l'armature du dossier est reliée à chaque flasque 12 par l'intermédiaire :
- d'un pivot 24 supérieur coulissant dans une lumière oblique 17 orientée vers le haut et vers l'avant, comme dans la quatrième forme de réalisation,
- et d'un pivot 55 solidaire d'une biellette 56, elle-même reliée au flasque 12 par un pivot 57.

La biellette 56 est sollicitée dans son sens de rotation correspondant au déplacement du pivot 55 vers l'avant, au moyen d'un ressort 58, par exemple un ressort de traction dont une extrémité est fixée à un crochet 59 de la biellette et dont l'autre extrémité est fixée dans un trou 60 d'une pièce métallique intermédiaire 61 solidarisée avec la partie supérieure 11 du dossier.

La position angulaire de la biellette 56, et donc la position angulaire de l'armature supérieure 11 du dossier, est réglée au moyen d'un mécanisme de réglage 41 comprenant une poignée 40, un mécanisme de transmission irréversible 39 et un pignon 50 identiques ou similaires à ceux décrits précédemment en regard des figures 13 et 14.

Le pignon 50 engrène avec une denture circulaire 62 d'une came 63 montée pivotante sur le flasque 12 autour d'un pivot 64, cette came 63 comportant un bord d'appui 65 orienté vers l'arrière, qui est en contact avec le pivot 55 de la biellette 56, au niveau de l'extrémité inférieure de la partie supérieure 11 de l'armature du dossier.

Pendant l'utilisation normale du siège de véhicule, le ressort 58 est suffisamment fort pour maintenir le pivot 55 en butée contre le bord d'appui 65 de la came 63.

En revanche, lorsque le véhicule subit un choc arrière dû à un accident de la circulation, le bassin de l'utilisateur appuie sur la traverse 22 de la partie supérieure 11 du dossier et fait pivoter la biellette 56 vers l'arrière contre la sollicitation élastique du ressort 58, pendant que le pivot 24 se déplace vers l'avant et vers le haut dans la rainure 17 correspondante.

Au cours de ce mouvement, une partie de l'énergie du choc est absorbée par le ressort 58.

De plus, avantageusement, l'énergie du choc est également absorbée, en fin de mouvement de la partie supérieure 11 de l'armature du dossier, par les pièces intermédiaires 61 susmentionnées, soudées à la partie supérieure 11 de l'armature du dossier au niveau des pivots 24 et 55, de part et d'autre du dossier.

Les pièces intermédiaires peuvent consister par exemple en des profilés en U dont les branches 66 sont orientées vers la partie supérieure 11 de l'armature du dossier et dont la base 67 comporte une patte 68 découpée dans la pièce de tôle 61.

Chaque patte 68 est de préférence repliée à 180° de façon à s'étendre sensiblement horizontalement vers l'avant parallèlement au flasque 12.

De plus, chaque patte 68 comporte un trou 69 ou autre moyen de fixation permettant de fixer le pivot 24 ou 55 correspondant.

Ainsi, après un choc arrière subi par le véhicule, les pièces intermédiaires 61 résistent tout d'abord pendant que la partie supérieure 11 de l'armature du dossier passe dans sa deuxième position angulaire. Puis, lorsque les pivots 24 et 55 sont en position de butée, les pattes 68 déchirent la tôle de la base 67 des profilés en U constituant des pièces intermédiaires 61, ce qui permet d'absorber encore une partie de l'énergie du choc.

On notera que, dans la forme de réalisation de la figure 10, le pignon 50 pourrait le cas échéant être entraîné par un mécanisme de commande totalement irréversible, notamment actionné par un moteur électrique.

Par ailleurs, dans toutes les formes de réalisation, les rainures supérieures 17 et les pivots associés 24 pourraient être remplacés par des liaisons par biellettes.

## Revendications

1. Siège de véhicule comportant un dossier (4) qui est surmonté d'un appui-tête (5) et qui est doté d'une armature rigide (9) supportant une matelassure (4a), ce dossier présentant une face avant (6) qui est destinée à servir d'appui pour le dos d'un passager, l'armature (9) du dossier étant formée en deux parties déplaçables l'une par rapport à l'autre, savoir d'une part, une partie inférieure (10) et, d'autre part, une partie supérieure (11) qui porte l'appui-tête (5), cette partie supérieure étant montée pivotante sur la partie inférieure autour d'un axe de rotation (X') entre des première et deuxième positions angulaires, respectivement inclinées au maximum vers l'arrière et au maximum vers l'avant par rapport à la partie inférieure (10), la face avant (6) du dossier présentant elle-même deux zones superposées inférieure (7) et supérieure (8) qui sont solidaires respectivement des parties inférieure (10) et supérieure (11) de l'armature du dossier, la partie supérieure (11) de l'armature du dossier présentant un organe d'appui (22) qui est disposé dans le dossier (4) au-dessous du niveau de l'axe de rotation (X') de ladite partie supérieure (11) pour que, lorsque le véhicule subit un choc arrière, le dos du passager appuie vers l'arrière sur ledit organe d'appui en s'enfonçant dans la matelassure (4a) du dossier, de façon à solliciter la partie supérieure (11) de l'armature du dossier vers sa deuxième position angulaire, les parties supérieure (11) et inférieure (10) de l'armature du dossier étant reliées entre elles par l'intermédiaire d'un dispositif de blocage (35;41) qui empêche normalement le pivotement involontaire de la partie supérieure (11), ce dispositif de blocage étant dimensionné pour céder lorsque la partie supérieure (11) du dossier n'est pas dans sa deuxième position angulaire et que ledit organe d'appui (22) subit une force dirigée vers l'arrière et supérieure à une valeur prédéterminée, en cas de choc arrière, et l'appui-tête (5) étant monté sur la partie supérieure (11) du dossier de façon à subir le même mouvement que ladite partie supérieure (11) en cas de choc arrière,
**caractérisé en ce que** le dispositif de blocage comprend un mécanisme de réglage (35;41) entraîné par un organe de commande (32;40), ce mécanisme de réglage étant adapté pour déplacer la partie supérieure (11) de l'armature du dossier entre ses première et deuxième positions angulaires en fonction de l'actionnement de l'organe de commande (32;40), et pour bloquer ladite partie supérieure de l'armature du dossier lorsque l'organe de commande n'est pas actionné, tant que ledit organe d'appui (22) ne subit pas une force dirigée vers l'arrière et supérieure à ladite valeur prédéterminée.

2. Siège selon la revendication 1, dans lequel la partie supérieure (11) de l'armature du dossier est montée sur la partie inférieure (10) pour se déplacer vers le haut en même temps qu'elle pivote vers l'avant.

3. Siège selon l'une quelconque des revendications 1 et 2, dans lequel la partie supérieure (11) de l'armature du dossier se présente sous la forme d'un cadre qui comporte une traverse inférieure horizontale (22), laquelle traverse constitue ledit organe d'appui.

4. Siège selon l'une quelconque des revendications précédentes, dans lequel le mécanisme de réglage comprend au moins un organe d'entraînement rotatif (31) en prise avec une denture (30), cet organe d'entraînement et cette denture étant reliés l'un à la partie supérieure (11) de l'armature du dossier et l'autre à la partie inférieure (10) de cette armature pour qu'un déplacement de l'organe d'entraînement (31) sur la denture (30) corresponde à une variation d'inclinaison de la partie supérieure (11) de l'armature du dossier, et la denture (30) étant adaptée pour se déformer progressivement plastiquement en permettant à l'organe d'entraînement (31) de se déplacer sans rotation le long de ladite denture en cas de choc arrière, cette denture constituant ainsi les moyens d'absorption d'énergie.

5. Siège selon la revendication 4, dans lequel la partie supérieure (10) de l'armature du dossier est montée pivotante sur la partie inférieure (11) de cette armature au moyen de pivots (23,24) coulissant dans des glissières (14,17), au moins un de ces pivots (23) comprenant ledit organe d'entraînement (31), et ladite denture (30) étant formée dans la glissière (14) correspondante.

6. Siège selon l'une quelconque des revendications 1 à 3, dans lequel la partie supérieure (11) de l'armature du dossier est montée pivotante sur la partie inférieure (10) de cette armature au moyen de pivots (23,24) coulissants dans des glissières (14,17), au moins un de ces pivots (23) étant solidarisé avec une bielle (36), ce pivot (23) et la glissière (14) correspondante étant solidaires l'une de la partie supérieure (11) de l'armature du dossier, et l'autre de la partie inférieure (10) de cette armature, la bielle (36) étant déplaçable au moyen dudit mécanisme de réglage (41) par rapport à la partie (10) de l'armature du dossier qui comprend ladite glissière, de façon qu'un déplacement de la bielle (36) entraîne un déplacement concomitant des pivots (23,24) dans leurs glissières (14,17), et la bielle (36) étant déformable plastiquement en cas de choc arrière en constituant ainsi les moyens d'absorption d'énergie.

7. Siège selon la revendication 6, dans lequel le mécanisme de réglage (41) comprend un pignon (38) monté rotatif sur la partie (10) de l'armature du dossier qui comprend la glissière correspondant à la bielle, ce pignon étant en prise avec une crémaillère (37) formée dans la bielle (36).

8. Siège selon l'une quelconque des revendications 6 et 7, dans lequel la bielle se présente sous la forme d'une plaque de tôle qui est pourvue d'une fente (42) s'étendant entre des première et deuxième extrémités (43,44), cette fente comportant une partie élargie à sa première extrémité et une partie resserrée (45) qui s'étend depuis ladite partie élargie jusqu'à la deuxième extrémité (44) de la fente, le pivot (23) qui est solidarisé avec la bielle (36) étant engagé sensiblement sans jeu dans ladite partie élargie, ladite fente (42) étant disposée sensiblement en correspondance avec la glissière (14) dans laquelle coulisse ledit pivot (23) au moins lorsque la partie supérieure (11) de l'armature du dossier est dans sa première position angulaire, et la fente (42) étant adaptée pour se déformer plastiquement progressivement en permettant audit pivot (23) de se déplacer vers la deuxième extrémité (44) de la fente lorsque la partie supérieure (11) de l'armature du dossier est déplacée vers sa deuxième position angulaire en cas de choc arrière.

9. Siège selon l'une quelconque des revendications 1 à 3, dans lequel le mécanisme de réglage (41) est porté par la partie inférieure (10) de l'armature du dossier et entraîne un pignon (50) qui est en prise avec une bielle dentée (52) montée pivotante sur la partie inférieure (10) du dossier et articulée à la partie supérieure (11) du dossier, le mécanisme de réglage étant adapté pour laisser tourner le pignon (50) en le freinant en l'absence d'actionnement de l'organe de commande (40), lorsque ledit pignon (50) subit un couple de rotation supérieur à une valeur prédéterminée, en cas de choc arrière.

10. Siège selon l'une quelconque des revendications 1 à 3, dans lequel le mécanisme de réglage entraîne un pignon (50) qui est monté sur la partie inférieure (10) de l'armature du dossier et qui entraîne une came dentée (63) elle-même montée pivotante sur ladite partie inférieure (10), cette came (63) présentant un bord d'appui (65) qui est en contact avec un élément (55) solidaire de la partie supérieure (11) de l'armature du dossier de façon à permettre uniquement un déplacement de ladite partie supérieure (11) vers sa deuxième position angulaire, et ladite partie supérieure (11) de l'armature du dossier étant sollicitée élastiquement vers sa première position angulaire.

11. Siège selon la revendication 10, dans lequel l'élément (55) solidaire de la partie supérieure (11) de l'armature du dossier relie ladite partie supérieure (11) à une biellette (56) qui est montée pivotante sur la partie inférieure (10) de l'armature du dossier.

## Patentansprüche

1. Fahrzeugsitz mit einer Rückenlehne (4), die von einer Kopfstütze (5) überragt wird und mit einem starren Gestell (9) versehen ist, das eine Polsterung (4a) trägt, wobei diese Rückenlehne eine Vorderseite (6) hat, die als Lehne für den Rücken eines Fahrgastes vorgesehen ist, wobei das Gestell (9) der Rückenlehne aus zwei zueinander beweglichen Teilen besteht, und zwar einerseits einem unteren Teil (10) und andererseits einem oberen Teil (11), der die Kopfstütze (5) trägt, wobei dieser obere Teil um eine Drehachse (X') drehbar an dem unteren Teil montiert ist und zwar zwischen einer ersten und einer zweiten Winkelposition, in der er bezogen auf den unteren Teil (10) maximal nach hinten bzw. maximal nach vorne geneigt ist, wobei die Vorderseite (6) der Rückenlehne selbst zwei übereinander angeordnete Bereiche aufweist, nämlichen einen unteren (7) und einen oberen (8), die jeweils fest mit dem unteren Teil (10) bzw. dem oberen Teil (11) des Gestells der Rückenlehne verbunden sind, wobei der obere Teil (11) des Gestells der Rückenlehne eine Stützeinrichtung (22) aufweist, die in der Rückenlehne (4) unter der Höhe der Drehachse (X') des oberen Bereichs (11) vorgesehen ist, damit der Rücken des Fahrgastes im Falle eines Heckaufpralls nach hinten von der Stützvorrichtung gestützt wird, in dem er in die Polsterung (4a) der Rückenlehne gedrückt wird, so dass der obere Teil (11) des Rückenlehnengestells in seine zweite Winkelposition gezogen wird, wobei der obere (11) und der untere Teil (10) des Rückenlehnengestells miteinander durch eine Blockiervorrichtung (35; 41) verbunden sind, die das ungewollte Schwenken des oberen Teils (11) normalerweise verhindert, welche Blockiervorrichtung so ausgelegt ist, dass sie nachgibt, wenn der obere Teil (11) der Rückenlehne nicht in seiner zweiten Winkelposition ist und die Stützeinrichtung (22) bei einem Heckaufprall eine nach hinten gerichtete und einen vorbestimmten Wert übersteigende Kraft erfährt, und wobei die Kopfstütze (5) so auf den oberen Teil (11) der Rückenlehne montiert ist, dass sie im Falle eines Heckaufpralls die gleiche Bewegung erfährt, wie der obere Teil (11),
**dadurch gekennzeichnet, dass** die Blockiervorrichtung eine Einstellvorrichtung (35; 41) umfasst, angetrieben von einem Bedienelement (32; 40), wobei die Einstellvorrichtung geeignet ist, den oberen Teil (11) des Rückenlehnengestells zwischen seiner ersten und zweiten Winkelposition in Abhängigkeit der Betätigung des Bedienelements (32; 40) zu versetzen, und den oberen Teil des Rückenlehnengestells zu blockieren, wenn das Bedienelement nicht betätigt ist, solange die Stützeinrichtung (22) nicht eine nach hinten gerichtete und einen vorbestimmten Wert übersteigende Kraft erfährt.

2. Sitz nach Anspruch 1, bei dem der obere Teil (11) des Rückenlehnengestells auf dem unteren Teil (10) so montiert ist, dass er sich im gleichen Moment nach oben bewegt, wenn er nach vorne schwenkt.

3. Sitz nach einem der Ansprüche 1 und 2, bei dem der obere Teil (11) des Rückenlehnengestells in Form eines Rahmens ausgeführt ist, der eine untere, horizontale Querleiste (22) aufweist, welche die genannte Stützvorrichtung bildet.

4. Sitz nach einem der vorstehenden Ansprüche, bei dem die Einstelleinrichtung zumindest eine Drehantriebsvorrichtung (31) im Eingriff mit einer Zahnung (30) umfasst, wobei das eine von der Antriebsvorrichtung und der Zahnung mit dem oberen Teil (11) des Rückenlehnengestells und das andere mit dem unteren Teil (10) dieses Gestells verbunden sind, damit eine Versetzung der Antriebsvorrichtung (31) an der Zahnung (30) einer Variation der Neigung des oberen Teils (11) des Rückenlehnengestells entspricht, und wobei die Zahnung (30) geeignet ist, um sich progressiv plastisch zu verformen, wobei sie der Antriebsvorrichtung (31) gestattet, sich ohne Drehung entlang der Zahnung zu versetzen im Falle eines Heckaufpralls, wobei die Zahnung somit Energieabsorptionsmittel bildet.

5. Sitz nach Anspruch 4, bei dem der obere Teil (10) des Rückenlehnengestells schwenkbar am unteren Teil (11) des Gestells montiert ist mittels Zapfen (23, 24), die in Schienen (14, 17) gleiten, wobei zumindest einer der Zapfen (23) die Antriebsvorrichtung (31) umfasst und die Zahnung (30) in der entsprechenden Schiene (14) ausgebildet ist.

6. Sitz nach einem Ansprüche 1 bis 3, bei dem der obere Teil (11) des Rückenlehnengestells schwenkbar an dem unteren Teil (10) des Gestells montiert ist mittels Zapfen (23, 24), die in Schienen (14, 17) gleiten, wobei zumindest einer der Zapfen (23) fest mit einem Pleuel (36) verbunden ist, wobei von dem Zapfen (23) und der entsprechenden Schiene (14) eines mit dem oberen Teil (11) des Rückenlehnengestells und das andere mit dem unteren Teil (10) des Gestells fest verbunden ist, wobei das Pleuel (36) bezüglich des Teils (10) des Rückenlehnengestells, das die Schiene umfasst, mittels der Einstellvorrichtung (41) versetzbar ist, so dass eine Versetzung des Pleuels (36) eine begleitende Versetzung der Zapfen (23, 24) in ihren Schienen (14, 17) antreibt, und wobei das Pleuel (36) plastisch verformbar ist im Falle eines Heckaufpralls, wobei es somit die Energieabsorptionsmittel bildet.

7. Sitz nach Anspruch 6, bei dem die Einstellvorrichtung (41) ein Ritzel (38) umfasst, das rotatorisch an dem Teil (10) des Rückenlehnengestells montiert ist, das die dem Pleuel entsprechende Schiene umfasst, wobei das Ritzel in Eingriff steht mit einer Zahnstange (37), ausgebildet in dem Pleuel (36).

8. Sitz nach einem der Ansprüche 6 und 7, bei dem das Pleuel sich in Form einer Blechplatte darstellt, die mit einem Schlitz (42) versehen ist, der sich zwischen einem ersten und einem zweiten Ende (43, 44) erstreckt, wobei dieser Schlitz einen erweiterten Abschnitt an seinem ersten Ende und einen verengten Abschnitt (45) umfasst, der sich von dem erweiterten Abschnitt bis zu dem zweiten Ende (44) des Schlitzes erstreckt, wobei der Zapfen (23), der mit dem Pleuel (36) fest verbunden ist, im wesentlichen ohne Spiel in den erweiterten Abschnitt eingefügt ist, wobei der Schlitz (42) im wesentlichen in Entsprechung mit der Schiene (14), in der der Zapfen (23) gleitet, angeordnet ist, zumindest dann, wenn der obere Teil (11) des Rückenlehnengestells in seiner ersten Winkelposition ist, wobei der Schlitz (42) geeignet ist, um sich plastisch progressiv zu verformen, wodurch dem Zapfen (23) erlaubt wird, sich zum zweiten Ende (44) des Schlitzes zu versetzen, wenn der obere Teil (11) des Rückenlehnengestells hin zu seiner zweiten Winkelposition versetzt wird im Fall eines Heckaufpralls.

9. Sitz nach einem der Ansprüche 1 bis 3, bei dem die Einstellvorrichtung (41) gestützt ist durch den unteren Teil (10) des Rückenlehnengestells und ein Ritzel (50) antreibt, das in Eingriff ist mit einem gezahnten Pleuel (52), schwenkbar an dem unteren Teil (10) der Rückenlehne montiert und angelenkt an dem oberen Teil (11) der Rückenlehne, wobei die Einstellvorrichtung geeignet ist, um das Ritzel (50) drehen zu lassen, es bei Abwesenheit von Betätigung des Bedienelements (40) abbremsend, wenn das Ritzel (50) ein einen vorbestimmten Wert übersteigendes Drehmoment erfährt im Falle eines Heckaufpralls.

10. Sitz nach einem der Ansprüche 1 bis 3, bei dem die Einstellvorrichtung ein Ritzel (50) antreibt, das an dem unteren Teil (10) des Rückenlehnengestells montiert ist und eine gezahnte Nocke (63) antreibt, die ihrerseits schwenkbar an dem unteren Teil (10) montiert ist, wobei die Nocke (63) einen Stützrand (65) aufweist, der in Kontakt mit einem Element (55) ist, das mit dem oberen Teil (11) des Rückenlehnengestells fest verbunden ist, um nur eine Versetzung des oberen Teils (11) hin zu seiner zweiten Winkelposition zu gestatten, wobei der obere Teil (11) des Rückenlehnengestells elastisch beaufschlagt wird hin zu seiner ersten Winkelposition.

11. Sitz nach Anspruch 10, bei dem das Element (55), das fest verbunden ist mit dem oberen Teil (11) des Rückenlehnengestells, den oberen Teil (11) mit einem Schaltgestänge (56) verbindet, das schwenkbar an dem unteren Teil (10) des Rückenlehnengestells montiert ist.

## Claims

1. A vehicle seat comprising a seat-back (4) surmounted by a headrest (5) and provided with a strength-member (9) supporting padding (4a), said seat-back having a front face (6) designed to bear against the back of a passenger, the strength-member (9) of the seat-back being made up of two portions that are movable one relative to the other, namely firstly a lower portion (10) and secondly an upper portion (11) carrying the headrest (5), said upper portion being pivotally mounted on the lower portion to pivot about an axis of rotation (X') between first and second angular positions in which it is respectively inclined as far rearwards and as far forwards as it will go relative to the lower portion (10), the front face (6) of the seat-back itself having two superposed regions, namely a lower region (7) and an upper region (8) which are secured respectively to the lower portion (10) and to the upper portion (11) of the seat-back strength-member, the upper portion (11) of the seat-back strength-member having a thrust member (22) located in the seat-back (4) below the level of the axis of rotation (X') of said upper portion (11) so that in the event of the vehicle being subjected to an impact from behind, the passenger's back bears rearwards against said thrust member as it is pushed into the padding (4a) of the seat-back, thereby urging the upper portion (11) of the seat-back strength-member towards its second angular position, the upper and lower portions (11, 10) of the seat-back strength-member being interconnected via a locking device (35; 41) which normally prevents involuntary pivoting of the upper portion (11), said locking device being dimensioned to give way when the upper portion (11) of the seat-back is not in its second angular position and said thrust member (22) is subjected to a rearwardly-directed force in excess of a predetermined value, in the event of an impact from behind, and the headrest (5) is mounted on the upper portion (11) of the seat-back so as to be subjected to the same movement as said upper portion (11) in the event of an impact from behind;
the seat being **characterized in that** the locking device includes an adjustment mechanism (35; 41) driven by a control member (32; 40), said adjustment mechanism being adapted to move the upper portion (11) of the seat-back strength-member between its first and second angular positions as a function of the actuation of the control member (32; 40), and to lock said upper portion of the seat-back strength-member when the control member is not being actuated, as long as said thrust member (22) does not undergo a rearwardly directed force in excess of said predetermined value.

2. A seat according to claim 1, in which the upper portion (11) of the seat-back strength-member is mounted on the lower portion (10) to move upwards at the same time as it pivots forward.

3. A seat according to claim 1 or 2, in which the upper portion (11) of the seat-back strength-member is in the form of a frame including a horizontal lower cross-member (22) constituting said thrust member.

4. A seat according to anyone of the preceding claims, in which the adjustment mechanism comprises at least one rotary drive member (31) meshing with a set of teeth (30), one of said drive member and said set of teeth being connected to the upper portion (11) of the seat-back strength-member, and the other one thereof being connected to the lower portion (10) of said strength-member so that displacement of the drive member (31) against the set of teeth (30) causes the inclination of the upper portion (11) of the seat-back strength-member to be varied, the set of teeth (30) being adapted to deform progressively and plastically to enable the drive member (31) to move along said set of teeth without rotating in the event of an impact from behind, said set of teeth thus constituting the energy absorption means.

5. A seat according to claim 4, in which the upper portion (10) of the seat-back strength-member is pivotally mounted on the lower portion (11) of said strength-member via pivots (23, 24) slidably received in the slideways (14, 17), at least one of the pivots (23) including said drive member (31), and said set of teeth (30) being formed in the corresponding slideway (14).

6. A seat according to anyone of claims 1-3, in which the upper portion (11) of the seat-back strength-member is pivotally mounted on the lower portion (10) of said strength-member by means of pivots (23, 24) slidably received in the slideways (14, 17), at least one of the pivots (23) being secured to a link (36), one of said pivot (23) and the corresponding slideway (14) being secured to the upper portion (11) of the seat-back strength-member, and the other one thereof being secured to the lower portion (10) of said strength-member, the link (36) being displaceable by means of said adjustment mechanism (41) relative to the portion (10) of the seat-back strength-member which includes said slideway so that displacement of the link (36) entrains corresponding displacement of the pivots (23, 24) in their slideways (14, 17) and the link (36) is plastically deformable in the event of an impact from behind, thereby constituting the energy absorption means.

7. A seat according to claim 6, in which the adjustment mechanism (41) comprises a gearwheel (38) mounted to rotate on the seat-back strength-member portion (10) which includes the slideway corresponding to the link, said gearwheel meshing with a rack (37) formed in the link (36).

8. A seat according to claim 6 or 7, in which the link is in the form of a piece of sheet metal which is provided with a slot (42) extending between first and second ends (43, 44), said slot having an enlarged portion at its first end and a narrower portion (45) extending from said enlarged portion to the second end (44) of the slot, the pivot (23) which is secured to the link (36) being engaged with substantially no play in said enlarged portion, said slot (42) being disposed substantially in correspondence with the slideway (14) in which said pivot (23) slides, at least when the upper portion (11) of the seat-back strength-member is in its first angular position, and the slot (42) is adapted to deform plastically and progressively while allowing said pivot (23) to move towards the second end (44) of the slot when the upper portion (11) of the seat-back strength-member is moved towards its second angular position in the event of an impact from behind.

9. A seat according to anyone of claims 1-3, in which the adjustment mechanism (41) is carried by the lower portion (10) of the seat-back strength-member and drives a gearwheel (50) which meshes with a toothed link (52) pivotally mounted on the lower portion (10) of the seat-back and hinged to the upper portion (11) of the seat-back, the adjustment mechanism being adapted to allow the gearwheel (50) to rotate while braking it in the absence of action being taken on the control member (40), whenever said gearwheel (50) is subjected to a rotary torque in excess of a predetermined value in the event of an impact from behind.

10. A seat according to anyone of claims 1-3, in which the adjustment mechanism entrains a gearwheel (50) which is mounted on the lower portion (10) of the seat-back strength-member and which entrains a toothed cam (63), itself pivotally mounted on said lower portion (10), said cam (63) having a bearing edge (65) in contact with an element (55) secured to the upper portion (11) of the seat-back strength-member so as to allow displacement of said upper portion (11) solely towards its second angular position, and said upper portion (11) of the seat-back strength-member is urged resiliently towards its first angular position.

11. A seat according to claim 10, in which the element (55) secured to the upper portion (11) of the seat-back strength-member connects said upper portion (11) to a link (56) which is pivotally mounted on the lower portion (10) of the seat-back strength-member.
